# EUROPÄISCHE PATENTSCHRIFT

(11) **EP 1 108 162 B1**
(45) Veröffentlichungstag und Bekanntmachung des Hinweises auf die Patenterteilung: **07.04.2004**
(21) Anmeldenummer: 00949127.5
(22) Anmeldetag: 23.06.2000
(51) Int. Cl.: F16H 61/00

(54) **SYSTEM ZUR HYDRAULISCHEN VERSTELLUNG DER ÜBERSETZUNG EINES CVT**
SYSTEM FOR HYDRAULICALLY ADJUSTING THE TRANSMISSION OF A CVT
SYSTEME DE REGLAGE HYDRAULIQUE DU RAPPORT D'UNE TRANSMISSION A CHANGEMENT DE VITESSES CONTINU

(30) Priorität: 30.06.1999 DE 19929869
(43) Veröffentlichungstag der Anmeldung: 20.06.2001
(73) Patentinhaber: ROBERT BOSCH GMBH, 70442 Stuttgart (DE)
(72) Erfinder: LUH, Joachim, D-74321 Bietigheim-Bissingen (DE)
(86) Internationale Anmeldenummer: PCT/DE2000/002063
(87) Internationale Veröffentlichungsnummer: WO 2001/002754

(56) Entgegenhaltungen:
- EP-A- 0 451 887
- DE-A- 19 649 483
- DE-A- 19 733 960

## Beschreibung

### Stand der Technik

Die Erfindung geht aus von einem System zur hydraulischen Verstellung der Übersetzung eines in seiner Übersetzung stufenlos verstellbaren Getriebes in einem Kraftfahrzeug mit den Merkmalen des Oberbegriffs des Anspruchs 1.

Kontinuierlich verstellbare Fahrzeuggetriebe und ihren System zur hydraulischen Verstellung der Übersetzung nach dem Oberbegriff des Anspruchs 1 sind beispielsweise bekannt aus der DE 196 49 483 A oder EP 0 451 887 A. Wie noch in der folgenden Beschreibung ausführlich beschrieben wird, geschieht die Verstellung der Getriebeübersetzung hydraulisch durch die Verstellung eines sogenannten Primärventils. Zur Verstellung der Getriebeübersetzung wird das Primärventil, das beispielsweise als Magnetventil ausgeführt sein kann, mit einem elektrischen Strom beaufschlagt und damit ein bestimmter Hydrauliköldruck am Getriebe eingestellt. Solch ein Ventil weist im allgemeine mehrere Schaltstufen auf, die durch die genaue Bemessung des Ansteuerstromes eingestellt werden. Eine Stellung des Ventils, im allgemeinen die Mittelstellung, dient dazu, kein Hydrauliköl durch das Ventil zu lassen (Sperrstellung).

Bei der Steuerung des Ventils ist es sehr wichtig, dass die Bemessung des Ansteuerstromes im Fahrbetrieb des Fahrzeugs im wesentlichen unabhängig von Toleranzen der Bauteile des Ventils und/oder unabhängig von der Alterung der Bauteile des Ventils sehr genau stattfinden kann.

Die Aufgabe der vorliegenden Erfindung besteht darin, im Normalbetrieb des Fahrzeugs eine sehr genaue Bemessung dieses Ansteuerstromes zu erzielen.

Diese Aufgabe wird durch die kennzeichnenden Merkmale des Anspruchs 1 gelöst.

### Vorteile der Erfindung

Wie schon erwähnt geht die Erfindung aus von einem System zur hydraulischen Verstellung der Übersetzung eines in seiner Übersetzung stufenlos verstellbaren Getriebes in einem Kraftfahrzeug. Diese Verstellung der Übersetzung geschieht durch die Ansteuerung wenigstens eines Ventils durch ein elektrisches Signal. Weiterhin wird die Übersetzung in einem Betriebszustand des Getriebes dadurch im wesentlichen konstant gehalten, dass das elektrische Signal auf einen vorgebbaren Wert gesetzt wird. Beispielsweise nimmt das Ventil dann die oben erwähnte Mittelstellung (Sperrstellung) ein. Dieser Betriebszustand wird auch als ratio-hold-Zustand bezeichnet.

Der Kern der Erfindung besteht darin, dass der vorgebbare Wert im Normalbetrieb des Fahrzeugs geändert werden kann. Die Erfindung hat den Vorteil, dass Bauteiltoleranzen im laufenden Betrieb des Fahrzeugs beziehungsweise des Getriebes ausgeglichen werden. Damit wird der Justageaufwand während der Montage des Fahrzeugs reduziert. Weiterhin wird durch die Erfindung die Alterung der Bauteile, insbesondere eine Veränderung der Feder in dem Ventil (z.B. Setzen der Feder) während des laufenden Betriebs kompensiert.

Insbesondere ist erfindungsgemäß vorgesehen, dass die Änderung des vorgebbaren Wertes abhängig von einer Adaption geschieht, wobei die Adaption bei Vorliegen vorgebbarer Betriebsbedingungen durchgeführt wird. Erfindungsgemäß wird also der Ventilstrom, der zur Einstellung der Mittelstellung des Ventils führen soll, im laufenden Betrieb an die momentan vorherrschenden Gegebenheiten (z.B. Alterung, Toleranzen) adaptiert.

Weiterhin kann vorgesehen sein, dass der vorgebbare Wert aus einem (festen) Grundwert und einem Offsetwert besteht. Der Offsetwert wird dann erfindungsgemäß geändert beziehungsweise adaptiert. Hierbei ist insbesondere vorgesehen, dass der Offsetwert nicht nur zur Einstellung der erwähnten Mittelstellung des Ventils herangezogen wird, sondern auch generell bei der Bildung des elektrischen Signals berücksichtigt wird.

Bei einer ersten Variante der Erfindung wird der vorgebbare Wert, insbesondere der Offsetwert, dann geändert, wenn bei Vorliegen der vorgebbaren Betriebsbedingungen (ratio-hold-Zustand) eine Änderung der Übersetzung erfaßt wird.

Dabei ist insbesondere vorgesehen, dass wenigstens eine der vorgebbaren Betriebsbedingungen dann vorliegt, wenn sich das Getriebe in einem Betriebszustand befindet, in dem die Übersetzung dadurch im wesentlichen konstant gehalten wird, dass das elektrische Signal auf den vorgebbaren Wert gesetzt wird (ratio-hold-Zustand). In dem speziellen Fall des schon beschriebenen Ventils bedeutet dies, dass das Ventil zur Einstellung der Mittellage (Sperrstellung) angesteuert wird, woraufhin sich die Getriebeübersetzung idealerweise gar nicht oder nur in geringem Maße ändern sollte. Ändert sich die Übersetzung dabei jedoch signifikant, so ist eine Adaption des Ansteuerstroms erforderlich. Insbesondere ist dabei vorgesehen, dass der vorgebbare Wert, insbesondere der Offsetwert, in der Weise geändert wird, dass der Änderung der Übersetzung entgegengewirkt wird.

Neben der im letzten Abschnitt erwähnten Betriebsbedingung können weitere der vorgebbaren Betriebsbedingungen dann vorliegen,
- wenn quasi-stationäre Betriebszustände des Getriebes vorliegen, wobei insbesondere vorgesehen ist, dass quasi-stationäre Betriebszustände dann vorliegen, wenn sich die Fahrzeuglängsgeschwindigkeit, insbesondere die Ausgangsdrehzahl des Getriebes, zeitlich nicht wesentlich ändert, und/oder
- wenn sich die Fahrzeuglängsgeschwindigkeit, insbesondere die Ausgangsdrehzahl oder die Eingangsdrehzahl des Getriebes, sich innerhalb eines vorgebbaren Bereichs befindet, und/oder
- wenn sich die Temperatur des Getriebes innerhalb eines vorgebbaren Bereichs befindet, und/oder
- wenn sich die Übersetzung des Getriebes innerhalb eines vorgebbaren Bereichs befindet.

In einer zweiten Variante der Erfindung ist vorgesehen, dass wenigstens eine der vorgebbaren Betriebsbedingungen dann vorliegt, wenn sich das Getriebe in einem Betriebszustand befindet, in dem die Übersetzung des Getriebes im wesentlichen konstant ist beziehungsweise sich zeitlich nicht wesentlich ändert.

Während die erste Variante die Adaption während des Betriebszustands des Getriebes vornimmt, bei dem das elektrische Signal auf einen vorgebbaren Wert gesetzt wird, geht die zweite Variante von einem Betriebszustand aus, in dem die Übersetzung konstant geregelt wird. Sieht man zunächst einmal von der minimalen und maximalen Übersetzung ab, so muß sich das Ventil während die konstante Übersetzung vorliegt in seiner Mittelstellung befinden. Dies kann zur Adaption verwendet werden, indem der vorgebbare Wert, insbesondere der Offsetwert, abhängig von dem elektrischen Signal, das bei Vorliegen der vorgebbaren Betriebsbedingungen eingestellt ist, geändert wird.

Neben der im letzten Abschnitt erwähnten Betriebsbedingung können weitere der vorgebbaren Betriebsbedingungen dann vorliegen,
- wenn sich die Übersetzung des Getriebes innerhalb eines vorgebbaren Bereichs befindet, und/oder
- wenn sich die zeitliche Änderung der Übersetzung des Getriebes innerhalb eines vorgebbaren Bereichs befindet, und/oder
- wenn quasi-stationäre Betriebszustände des Getriebes vorliegen, wobei insbesondere vorgesehen ist, dass quasi-stationäre Betriebszustände dann vorliegen, wenn sich die Fahrzeuglängsgeschwindigkeit, insbesondere die Ausgangsdrehzahl des Getriebes, zeitlich nicht wesentlich ändert, und/oder
- wenn sich die Temperatur des Getriebes innerhalb eines vorgebbaren Bereichs befindet.

Ein dritte Variante der Erfindung sieht vor, dass durch die Ansteuerung des Ventils ein Druck gesteuert wird und ein Druckwert erfaßt wird, der den Druck in dem ratio-hold-Betriebszustand des Getriebes repräsentiert. Der vorgebbare Wert kann dann abhängig von dem erfaßten Druckwert geändert werden.

Die Idee des dritten Variante der Erfindung geht also davon aus, dass ein Drucksensor zur Erfassung des durch das Ventil gesteuerten Drucks vorhanden ist oder dieser Druck aus anderen Größen berechnet werden kann. Die Mittelstellung des Ventils wird so eingestellt beziehungsweise adaptiert, dass sich ein bestimmter Druck einstellt.

Weiterhin kann vorgesehen sein, dass das elektrische Signal, also der Stromwert, während der Adaption derart eingestellt wird, dass die Verstellung der Übersetzung zu höheren Übersetzungen vorgenommen wird, das CVT also hochschaltet. Hierbei kann das während der Adaption eingestellte elektrische Signal um einen Differenzwert kleiner als das vor der Adaption eingestellte elektrischen Signal sein. Das heißt, dass der Strom, der während der Adaption eingestellt wird, gleich dem "ratio-hold"-Stromwert minus einem Differenzwert ist, der Strom also während der Adaption etwas kleiner als der "ratio-hold"-Strom ist.

Weitere Ausgestaltungen sind den Unteransprüchen zu entnehmen.

### Zeichnung

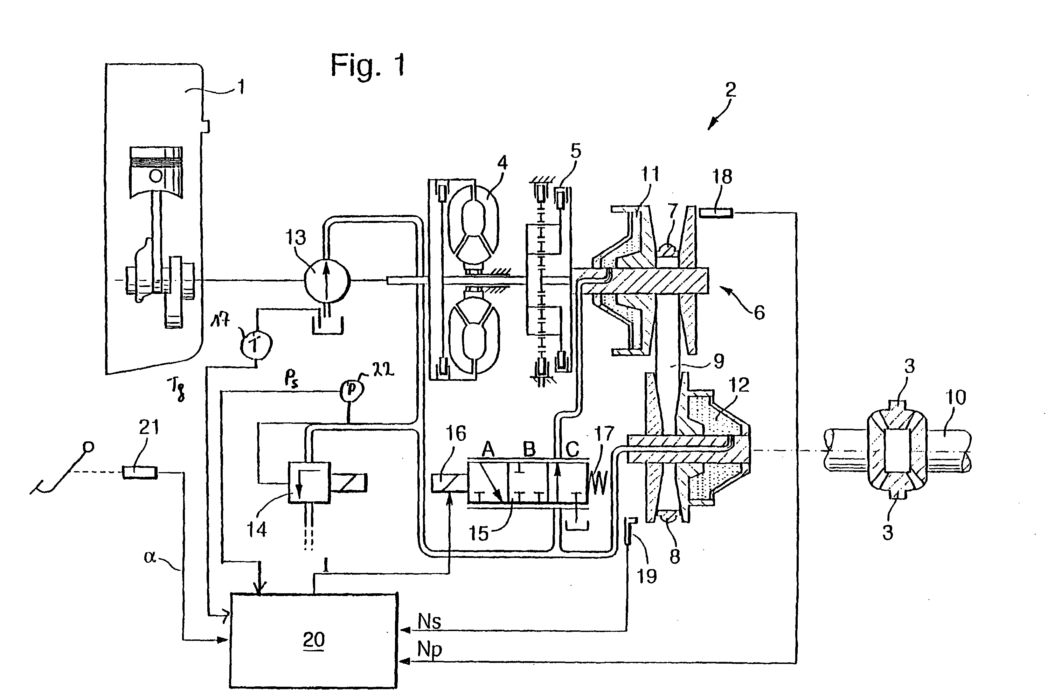

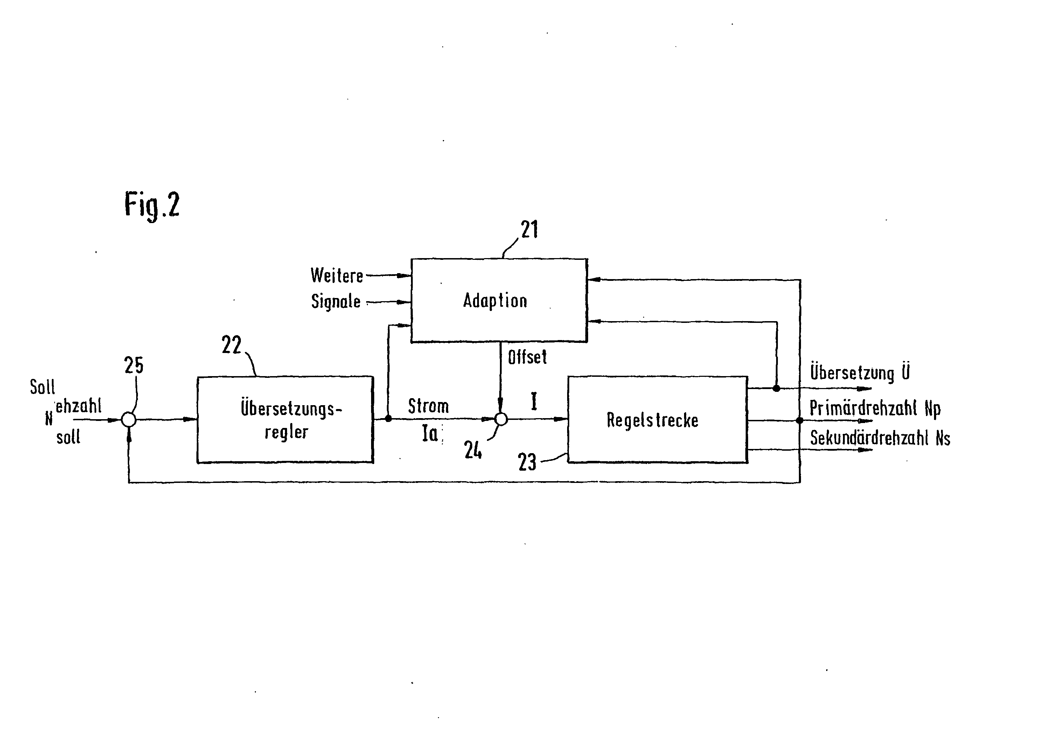

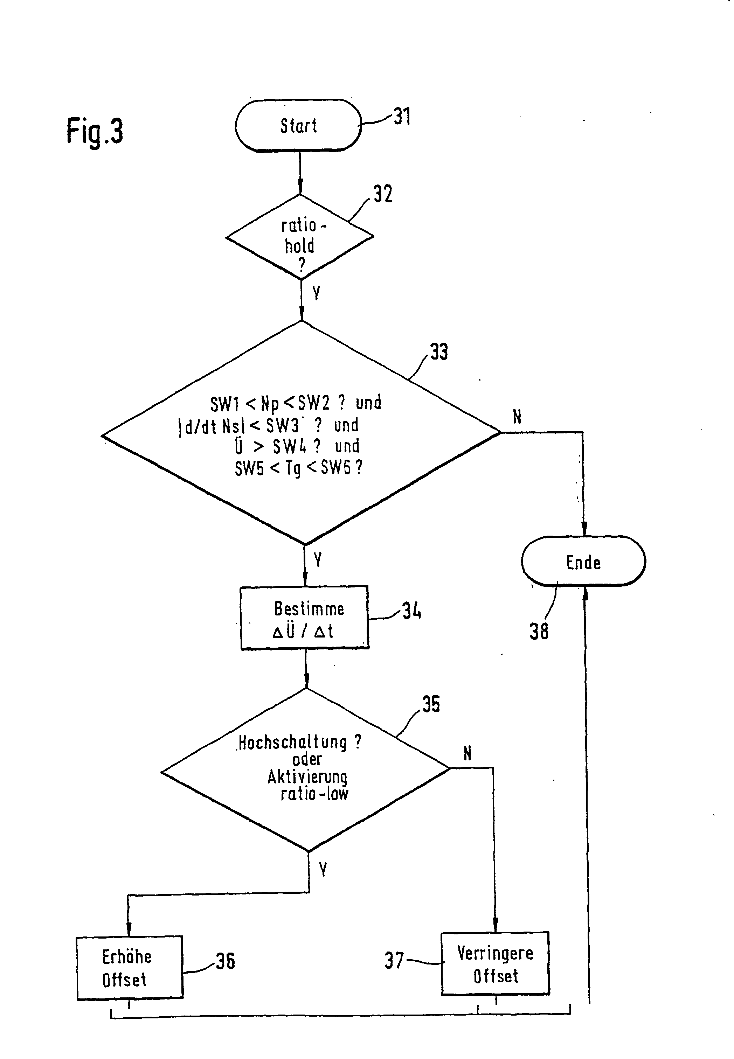

Die Figur 1 zeigt ein Übersichtsbild eines kontinuierlich verstellbaren Getriebes, während die Figur 2 ein Blockschaltbild der Ankopplung des erfindungsgemäßen Adaptionsalgorithmus an die Getriebesteuerung darstellt. Die Figuren 3, 4 und 5 offenbaren Ablaufdiagramme der drei erfindungsgemäßen Varianten.

### Ausführungsbeispiele

Die Erfindung soll im folgenden anhand eines Ausführungsbeispiels näher erläutert werden. In der Figur 1 ist dabei mit dem Bezugszeichen 2 ein stufenloses Umschlingungsgetriebe in Kraftfahrzeugen zum Zweck der Kraftübertragung vom Motor 1 zu den Antriebswellen 3 der Räder dargestellt. Ein solches stufenloses Getriebe hat beispielsweise einen Drehmomentwandler 4 und Kupplungen 5 für Vorwärts- und Rückwärtsfahrtumschaltungen, die zwischen dem Motor 1 und dem Variator 6 angeordnet sind. Der Variator 6 besteht aus einem antriebs-(primären) und einem abtriebsseitigen (sekundären) Kegelscheibensatz 7 und 8, wobei mit Hilfe einer Kette oder eines Schubgliederbandes 9 die Kraft von dem Antriebs- 7 zum Abtriebsscheibensatz 8 übertragen wird. Jeder Kegelscheibensatz besteht aus einer axial feststehenden und einer axial beweglichen Scheibe. Durch gleichzeitige Variation der axial beweglichen Scheiben auf dem Antriebs- und dem Abtriebsscheibensatz ändert sich die Übersetzung des Variators 6 von einer hohen Anfahrübersetzung Low zu einer niedrigen Übersetzung Overdrive.

Der Abtriebsscheibensatz ist über ein Ausgleichsgetriebe 10 mit den Antriebswellen 3 der Räder verbunden. Die axial beweglichen Kegelscheiben 7 und 8 sind hydraulisch verstellbar und besitzen dazu die Ölkammern 11 und 12.

Zur Druckölversorgung besitzt das Getriebe eine Ölpumpe 13, die beispielsweise mit der Drehzahl des Verbrennungsmotors 1 läuft. In einer möglichen Ausführungsform wird die Spannung des Bandes 9 mit Hilfe eines Druckbegrenzungsventils 14 eingestellt, welches den Druck, den Sekundärdruck, in der abtriebsseitigen Ölkammer 12 reguliert. Die Getriebeübersetzung wird mit Hilfe eines Proportionalventils (Primärventil) 15 an der Primärseite eingestellt. Das Ventil 15 kann beispielsweise als Magnetventil ausgeführt sein. Der Sekundärdruck wird durch den Drucksensor 22 erfaßt und als Signal Ps dem Steuergerät 20 zugeführt.

Dieses Primärventil 15 kann in der Stellung A Öl aus der antriebsseitigen Ölkammer 11 (primäre Ölkammer) zum Öltank hin ablassen und somit den Druck vermindern, wodurch sich die Übersetzung nach Low verstellt. In der Stellung C fließt Öl in die antriebsseitige Ölkammer 11, wodurch sich die Übersetzung in Richtung Overdrive verändert und der Druck in der antriebsseitigen Ölkammer 11 ansteigt. In der Stellung B des Proportionalventils 15 ist das Ventil geschlossen und die primäre Ölkammer 11 abgedichtet, d. h. es kann nahezu kein Öl aus der Ölkammer 11 zu- oder abfließen. Damit bleibt die Übersetzung des Getriebes, zumindest im wesentlichen, konstant. Das Proportionalventil 15 kann beispielsweise direktgesteuert sein oder durch ein Vorsteuerventil in bekannter Weise angesteuert werden.

In dem hier beschriebenen Ausführungsbeispiel wird durch Einstellen eines Stromes I in dem Magneten 16 eine Kraft auf den Ventilschieber erzeugt. Durch die am Ventilschieber vorhandene Feder 17 stellt sich eine bestimmte Stellung des Proportionalventils 15 ein. Das bedeutet, dass der Strom I durch den Magneten 16 die Stellung des Proportionalventils 15 und damit den Öffnungsquerschnitt des Ventils bestimmt.

Weiterhin existiert ein Sensor 18 zur Ermittlung der Primärdrehzahl Np und ein Sensor 19 zur Ermittlung der Sekundärdrehzahl Ns. Die Primär- und Sekundärsensorsignale Np und Ns werden einem Steuergerät 20 zugeführt, welches den Strom I durch den Magneten 16 des Proportionalventils 15 einstellt.

Weiterhin ist beispielsweise ein Sensor 21 zur Ermittlung der Stellung α des vom Fahrer betätigbaren Fahrpedals angeschlossen.

Die Getriebe- beziehungsweise Getriebeöltemperatur wird durch den Temperatursensor 17 erfaßt und als Signal Tg dem Steuergerät 20 zugeführt.

Der Strom I des Primärventils 15 wird unter anderem bei stillstehendem Fahrzeug auf einen festen Wert gesetzt, den sogenannten Mittelpunktstrom. Das Ventil 15 nimmt dann, zumindest idealerweise, die Stellung B ein. Die Übersetzung ist dann konstant und der Übersetzungsregler befindet sich im sogenannten Ratio-hold-Mode. Der einzustellende Mittelpunktstrom hängt von Bauteiltoleranzen ab und muß über der Getriebelebensdauer angepaßt werden, um z.B. Alterung der Feder am Primärventil 15 zu kompensieren.

Im den folgenden Ausführungsbeispielen der Erfindung werden Möglichkeiten zur Adaption des Mittelpunktsstroms beschrieben. Wie erwähnt können damit Bauteiltoleranzen im laufenden Betrieb des Fahrzeugs ausgeglichen werden. Dies bedeutet, dass der Justageaufwand bei der Montage des Getriebes reduziert werden kann. Weiterhin wird die Alterung der Bauteile, insbesondere ein Setzen der Feder 17 am Primärventil 15 während des laufenden Betriebs kompensiert.

Die Schaltgeschwindigkeit und die Schaltrichtung des Getriebes 2 hängen unmittelbar mit dem Ansteuerstrom I zusammen. Für die Übersetzungsregelung ist der Wert des Ansteuerstroms, bei dem das Primärventil 15 die Übersetzung konstant hält, ein wichtiger Parameter. Er wird, wie schon erwähnt, als Mittelpunktstrom bezeichnet und beeinflußt die Höhe der stationären Regelabweichung. Insbesondere bei extrem kleinen Fahrgeschwindigkeiten kleiner 5 km/h ist es aus Kostengründen nicht möglich, die Übersetzung des CVT-Getriebes 2 zu erfassen. In diesem Fall wird als Ansteuerstrom I der Mittelpunktstrom eingestellt, um die Übersetzung konstant zu halten.

Der vereinfachte Regelkreis einschließlich der erfindungsgemäßen Adaption ist in der Figur 2 dargestellt. Die Regelstrecke 23 besteht aus der Getriebesteuerung, der Hydrauliksteuerung und dem CVT-Getriebe. Mit dem Ansteuerstrom I des Primärventils 15 wird die Übersetzung Ü des Getriebes 2 eingestellt. Die Getriebesteuerung sensiert mittels der entsprechenden Sensoren die Primär- und Sekundärdrehzahl (Np, Ns) und berechnet daraus die Übersetzung Ü des CVT-Getriebes 2. Der Übersetzungsregler 22 führt die Primärdrehzahl Np der Solldrehzahl Np,soll nach (Subtraktion 25) und berechnet den erforderlichen (vorläufigen) Ansteuerstrom Ia des Primärventils 15. Übersetzung Ü, Primärdrehzahl Np und (vorläufiger) Ansteuerstrom Ia gehen in die Adaption 21 ein, welche einen Offsetwert für den (vorläufigen) Ansteuerstrom Ia liefert. Dieser Offsetwert wird im Punkt 24 dem (vorläufigen) Ansteuerstrom Ia überlagert zum tatsächlich den Ventil 15 zugeleiteten Ansteuerstrom I. Der zu adaptierende Offset-Strom ist im wesentlichen zeitinvariant.

Der Übersetzungsregler 22 aktiviert je nach Arbeitspunkt des CVT eine von drei Betriebsarten:
- Ratio-hold: Der Ansteuerstrom wird auf den Wert des Mittelpunktstroms eingestellt. Dadurch bleibt die Übersetzung Ü nahezu konstant. Der ratio-hold-Zustand wird bei stehendem Fahrzeug eingestellt. Weiterhin bei geringen Geschwindigkeiten, wenn das CVT-Getriebe die Anfahrübersetzung einstellen soll und die tatsächliche Übersetzung nahe der Anfahrübersetzung ist.
- Ratio-Low: Der Ansteuerstrom wird auf einen Wert eingestellt, der eine langsame Rückschaltung bewirkt. Dieser Wert kann fest gewählt werden, muß aber nicht unbedingt fest gewählt werden. Diese Betriebsart wird verwendet, wenn das CVT-Getriebe 2 beim langsamen Rollen des Fahrzeugs in der Anfahrübersetzung stehen soll, die tatsächliche Übersetzung Ü aber kleiner als ein Schwellwert nahe der Anfahrübersetzung ist.
- Regelung: Der Ansteuerstrom wird auf Grund der Differenz von Soll- und Istprimärdrehzahl (Ausgang der Verknüpfung 25) eingestellt.

Der Mittelpunktstrom ist für den Übersetzungsregler 22 besonders bei dem ratio-hold-Betrieb wichtig, damit die Übersetzung Ü konstant bleibt. Schaltet das CVT-Getriebe 2 im ratio-hold-Betrieb jedoch hoch und überschreitet eine vorgebbare Übersetzungsschwelle, dann wechselt der Übersetzungsregler 22 in die Betriebsart ratio-Low, um die Anfahrübersetzung wieder einzustellen.

Der Programmablauf des Adaptionsalgorithmus in einer ersten Variante ist in der Figur 3 dargestellt.

Die Adaption darf nur in Betriebspunkten erfolgen, die einen sicheren Betrieb gewährleisten. Daher werden die folgenden Bedingungen geprüft, bevor die Adaption aktiviert wird. Führt eine der im folgenden beschriebenen Abfragen zu dem Ergebnis Nein, so wird direkt zum Endschritt 38 gegangen und keine Adaption gemäß der ersten Variante durchgeführt.

Die Adaption findet nur im ratio-hold-Zustand statt, d.h. bei kleinen Fahrgeschwindigkeiten und der Anfahrübersetzung, beispielsweise wenn das Fahrzeug mit Leergas rollt. Hierzu wird nach dem Startschritt 31 zunächst in der Abfrage 32 festgestellt, ob momentan der ratio-hold-Betriebsmodus eingestellt ist. Ist dies nicht der Fall, so wird direkt zum Endschritt 38 gegangen und keine Adaption gemäß der ersten Variante durchgeführt. Ist dies jedoch der Fall, so wird zum Abfrageschritt 33 übergegangen. Weiterhin wird durch die dritte Abfrage des Schritts 33 sichergestellt, dass die Übersetzung Ü hinreichend groß (Schwellenwert SW4) ist.

Die Adaption wird nur bei quasi-stationären Fahrsituationen angewendet. Diese sind dadurch gekennzeichnet, dass die Beschleunigung klein ist. Hierzu wird in der zweiten Abfrage des Schritts 33 der Betrag des Sekundärdrehzahlgradienten dNs/dt, also die zeitliche Änderung der Sekundärdrehzahl Ns, mit einem hinreichend kleinen Schwellenwert SW3 verglichen.

Die Adaption wird nur dann durchgeführt, wenn die Auswirkung der Veränderung des Adaptionsparameters beobachtbar ist. Beispielsweise ändert sich die Getriebeübersetzung nicht im Stillstand, d.h. im Stillstand kann keine Adaption erfolgen. In der ersten Abfrage des Schritts 33 wird hierzu abgefragt, ob die Primärdrehzahl Np im Bereich zwischen den zwei Schwellenwerten SW1 und SW2 liegt.

Bei extrem tiefen oder hohen Getriebetemperaturen Tg erfolgt keine Adaption. In der letzten Abfrage des Schritts 33 wird hierzu abgefragt, ob die Temperatur Tg im Bereich zwischen den zwei Schwellenwerten SW5 und SW6 liegt.

Sind die Voraussetzungen für eine Adaption vorhanden, so wird im Schritt 34 die Richtung der Übersetzungsverstellung ΔÜ während einer festgelegten Zeitspanne Δt (Richtwert 0.5 s) bestimmt.

Wird im Schritt 35 festgestellt, dass das Getriebe 2 hochgeschaltet hat, dann muß der Offsetstrom im Schritt 36 vergrößert werden. Dadurch schaltet das Getriebe 2 langsamer hoch.

Wenn im Schritt 35 festgestellt wird; dass das Getriebe 2 rückgeschaltet hat, dann wird der Offsetstrom im Schritt 37 verringert. Dadurch kann das Getriebe eher hochschalten.

Wird während der Wartezeit Δt vom Übersetzungsregler 22 die Betriebsart ratio-low aktiviert (Abfrage im Schritt 35), dann kann auch davon ausgegangen werden, dass das Getriebe 2 zu schnell hochschaltet. Auch in diesem Fall wird im Schritt 36 der Offsetstrom erhöht.

Die Adaption arbeitet somit als Zweipunktregler, der den Offsetstrom entweder um einen kleinen Betrag (Richtwert beispielsweise 1 mA) erhöht oder verringert. Dabei darf der Offsetstrom aber nur in bestimmten Grenzen verändert werden.

Der Fahrer des Fahrzeugs bemerkt die Adaption praktisch nicht, da die Übersetzung sich nur minimal verändert.

Zur ersten Variante kann folgendes zusammenfassend ausgeführt werden:

Erfindungsgemäß wird ein Algorithmus vorgestellt, der einen Offsetstrom für den Mittelpunktstrom adaptiert. Die Adaption erfolgt insbesondere bei langsam rollendem Fahrzeug bei ca. 2 bis 8 km/h, bei leichtem bis moderatem Anfahren des Fahrzeugs vorwärts und bei Rückwärtsfahrt. Die Adaption wird nur bei bestimmten Betriebszuständen aktiviert und darf den Offsetstrom in bestimmten Grenzen variieren. Die Adaption arbeitet dann, wenn der Übersetzungsregler im schon beschriebenen ratio-hold-Modus arbeitet. In dieser Betriebsart wird der Ansteuerstrom I immer auf den Mittelpunktstrom eingestellt.

Die Adaption wird gesperrt, wenn
- die Getriebetemperatur Tg extrem niedrig oder hoch ist,
- die Fahrzeugbeschleunigung bzw. -verzögerung groß ist,
- die Getriebeeingangsdrehzahl außerhalb bestimmter Grenzen liegt (Fahrzeug steht bzw. fährt relativ schnell),
- die Übersetzung nicht nahe der größten Übersetzung (Low) ist.

Der Adaptionsalgorithmus bestimmt die Geschwindigkeit der Übersetzungsverstellung. Schaltet das Getriebe 2 im ratio-hold-Mode zurück oder bleibt das Getriebe 2 innerhalb einer festgelegten Zeitspanne in Low, dann wird der Offsetstrom verringert.

Schaltet das Getriebe innerhalb der Zeitspanne hoch, dann wird der Offsetstrom vergrößert.

Die Idee der beschriebenen ersten Variante besteht darin, dass sich das Primärventil 15 in der Mittelstellung B befindet, wenn die Übersetzung konstant ist. Davon ausgenommen wird jedoch die Betriebssituationen, während der eine Übersetzung nahe Overdrive (minimale Übersetzung Ü) oder Low (maximale Übersetzung Ü) eingestellt wird, da dann das Primärventil 15 auch ganz in eine Richtung geöffnet sein kann und die Übersetzung Ü trotzdem konstant ist. Die in Frage kommenden Fahrmanöver sind z.B. Konstantfahrten mit Geschwindigkeiten von ca. 15 bis 60 km/h.

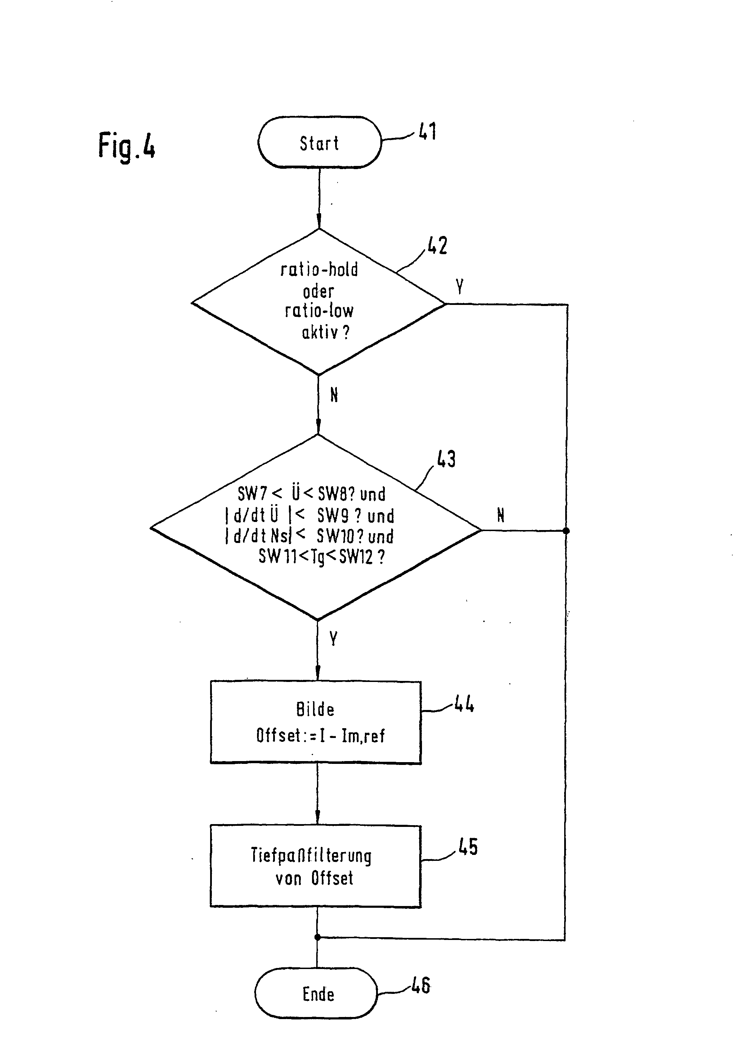

Dies macht sich die zweite Variante der erfindungsgemäßen Adaption, die in der Figur 4 dargestellt ist, zunutze.

Hierzu wird nach dem Startschritt 41 in der Abfrage 42 zunächst sichergestellt, dass der ratio-hold- oder ratio-low-Modus nicht eingestellt ist. Ist dieser Modus eingestellt, so wird sofort zum Endschritt 46 übergegangen und keine Adaption gemäß der zweiten Variante durchgeführt. Gegebenenfalls kann in diesem Fall die erste Adaptionsvariante durchgeführt werden.

Ist also der Regelmodus eingestellt, so werden im Schritt 43 verschiedene Abfragen getätigt. Führt eine der im folgenden beschriebenen Abfragen zu dem Ergebnis Nein, so wird direkt zum Endschritt 46 gegangen und keine Adaption gemäß der zweiten Variante durchgeführt.

Durch die erste Abfrage im Schritt 43 wird überprüft, dass die Übersetzung Ü sich innerhalb der Schwellenwerte SW7 und SW8 befindet. Hiermit wird sichergestellt, dass sich die Übersetzung Ü hinreichend von den Extremwerten (Low, Overdrive) unterscheidet.

Weiterhin wird durch die zweite Abfrage ermittelt, ob der Betrag des Übersetzungsgradienten dÜ/dt hinreichend klein (Schwellenwert SW9) ist, die Übersetzung sich also nicht wesentlich ändert.

Ebenso sollen quasi-stationäre Betriebszustände des Getriebes vorliegen. Dies wird dadurch abgefragt, dass der Betrag des Sekundärdrehzahlgradienten dNs/dt hinreichend klein (Schwellenwert SW10) ist.

Bei extrem tiefen oder hohen Getriebetemperaturen Tg erfolgt keine Adaption. In der letzten Abfrage des Schritts 43 wird hierzu abgefragt, ob die Temperatur Tg im Bereich zwischen den zwei Schwellenwerten SW11 und SW12 liegt.

Sind alle Abfragen im Schritt 43 mit Ja zu beantworten, so regelt der Übersetzungsregler durch den momentan Ansteuerstrom I die Übersetzung Ü im wesentlichen auf eine konstanten Wert. Das Ventil 15 muß sich also in der Mittelstellung B befinden. Im Schritt 44 wird dann der Wert Offset als Differenz zwischen dem momentanen Ansteuerstrom I und dem gespeicherten Referenz-Mittelpunktstrom Im,ref gebildet.

Im Schritt 45 wird der Offsetwert noch durch einen Tiefpaß gefiltert.

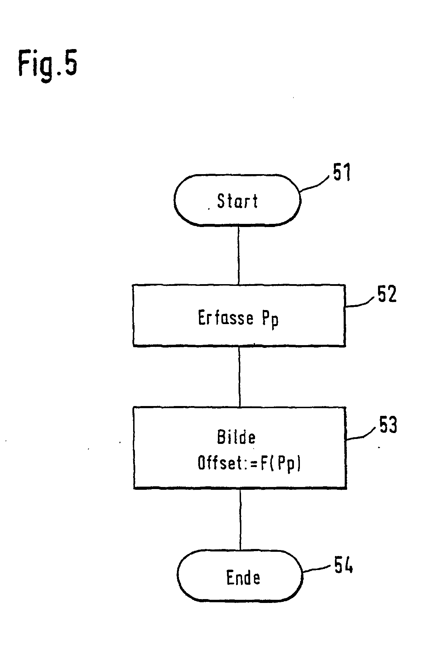

Die Idee der dritten Variantes (Figur 5) besteht darin, dass ein Primärdrucksensor (nicht in der Figur 1 dargestellt) vorhanden ist oder der Primärdruck Pp aus anderen Größen, z.B. Sekundärdrucksensorsignal und den Ansteuerströmen der Primär- und Sekundärventile berechnet werden kann. Die Mittelstellung des Primärventils wird so eingestellt, dass sich ein bestimmter Primärdruck einstellt.

Hierzu wird in der Figur 5 nach dem Startschritt 51 zunächst im Schritt 52 der Primärdruck Pp erfaßt. Im Schritt 53 wird dann der Offsetwert als Funktion F des Primärdrucks Pp gebildet, woraufhin zum Endschritt 54 übergegangen wird.

## Patentansprüche

1. System zur hydraulischen Verstellung der Übersetzung eines in seiner Übersetzung stufenlos verstellbaren Getriebes (2) in einem Kraftfahrzeug, wobei die Verstellung der Übersetzung durch die Ansteuerung wenigstens eines Ventils (15) durch ein elektrisches Signal (I) geschieht und die Übersetzung in einem Betriebszustand des Getriebes "ratio hold" dadurch im wesentlichen konstant gehalten wird, dass das elektrische Signal (I) auf einen vorgebbaren Wert gesetzt wird,
**dadurch gekennzeichnet, dass** der vorgebbare Wert im laufenden Betrieb des Fahrzeugs geändert werden kann.

2. System Verfahren nach Anspruch 1, **dadurch gekennzeichnet, dass** die Änderung des vorgebbaren Wertes abhängig von einer Adaption geschieht, wobei die Adaption bei Vorliegen vorgebbarer Betriebsbedingungen durchgeführt wird.

3. System nach Anspruch 1, **dadurch gekennzeichnet, dass** der vorgebbare Wert aus einem Grundwert und einem Offsetwert besteht und der Offsetwert geändert werden kann, wobei insbesondere vorgesehen ist, dass der Offsetwert bei der Bildung des elektrischen Signals (I) berücksichtigt wird.

4. System nach Anspruch 2, insbesondere nach Anspruch 3, **dadurch gekennzeichnet, dass** der vorgebbare Wert, insbesondere der Offsetwert, dann geändert wird, wenn bei Vorliegen der vorgebbaren Betriebsbedingungen eine Änderung der Übersetzung erfaßt wird, wobei insbesondere vorgesehen ist, dass der vorgebbare Wert, insbesondere der Offsetwert, in der Weise geändert wird, dass der Änderung der Übersetzung entgegengewirkt wird.

5. System nach Anspruch 2, **dadurch gekennzeichnet, dass** wenigstens eine der vorgebbaren Betriebsbedingungen dann vorliegt, wenn sich das Getriebe in einem Betriebszustand "ratio hold" befindet, in dem die Übersetzung dadurch im wesentlichen konstant gehalten wird, dass das elektrische Signal (I) auf den vorgebbaren Wert gesetzt wird.

6. System nach Anspruch 5, **dadurch gekennzeichnet, dass** weitere der vorgebbaren Betriebsbedingungen dann vorliegen,
- wenn quasi-stationäre Betriebszustände des Getriebes vorliegen, wobei insbesondere vorgesehen ist, dass quasi-stationäre Betriebszustände dann vorliegen, wenn sich die Fahrzeuglängsgeschwindigkeit, insbesondere die Ausgangsdrehzahl des Getriebes, zeitlich nicht wesentlich ändert, und/oder
- wenn sich die Fahrzeuglängsgeschwindigkeit, insbesondere die Ausgangsdrehzahl oder die Eingangsdrehzahl des Getriebes, sich innerhalb eines vorgebbaren Bereichs befindet, und/oder
- wenn sich die Temperatur des Getriebes innerhalb eines vorgebbaren Bereichs befindet, und/oder
- wenn sich die Übersetzung des Getriebes innerhalb eines vorgebbaren Bereichs befindet.

7. System nach Anspruch 2, **dadurch gekennzeichnet, dass** wenigstens eine der vorgebbaren Betriebsbedingungen dann vorliegt, wenn sich das Getriebe in einem Betriebszustand befindet, in dem die Übersetzung des Getriebes im wesentlichen konstant ist beziehungsweise sich zeitlich nicht wesentlich ändert.

8. System nach Anspruch 7, insbesondere nach Anspruch 3 und 7, **dadurch gekennzeichnet, dass** der vorgebbare Wert, insbesondere der Offsetwert, abhängig von dem elektrischen Signal (I), das bei Vorliegen der vorgebbaren Betriebsbedingungen eingestellt ist, geändert wird.

9. System nach Anspruch 7, **dadurch gekennzeichnet, dass** weitere der vorgebbaren Betriebsbedingungen dann vorliegen,
- wenn sich die Übersetzung des Getriebes innerhalb eines vorgebbaren Bereichs befindet, und/oder
- wenn sich die zeitliche Änderung der Übersetzung des Getriebes innerhalb eines vorgebbaren Bereichs befindet, und/oder
- wenn quasi-stationäre Betriebszustände des Getriebes vorliegen, wobei insbesondere vorgesehen ist, dass quasi-stationäre Betriebszustände dann vorliegen, wenn sich die Fahrzeuglängsgeschwindigkeit, insbesondere die Ausgangsdrehzahl des Getriebes, zeitlich nicht wesentlich ändert, und/oder
- wenn sich die Temperatur des Getriebes innerhalb eines vorgebbaren Bereichs befindet.

10. System nach Anspruch 1, **dadurch gekennzeichnet, dass** durch die Ansteuerung des Ventils (15) ein Druck gesteuert wird und ein Druckwert erfaßt wird, der den Druck in dem Betriebszustand des Getriebes "ratio hold", repräsentiert, und der vorgebbare Wert abhängig von dem erfaßten Druckwert geändert werden kann.

11. System nach Anspruch 2, **dadurch gekennzeichnet, dass** das elektrische Signal (I) während der Adaption derart eingestellt wird, dass die Verstellung der Übersetzung zu höheren Übersetzungen vorgenommen wird, wobei insbesondere vorgesehen ist, dass das während der Adaption eingestellte elektrische Signal um einen Differenzwert (ΔI) kleiner als das vor der Adaption eingestellte elektrischen Signal (I) ist.

## Claims

1. System for hydraulically adjusting the transmission ratio of a continuously variable transmission (2) in a motor vehicle, the transmission ratio being adjusted by actuating at least one valve (15) by means of an electrical signal (I), and the transmission ratio being kept essentially constant in a ratio hold operating state of the transmission by virtue of the fact that the electrical signal (I) is set to a predefinable value, **characterized in that** the predefinable value can be changed during the ongoing operation of the vehicle.

2. System according to Claim 1, **characterized in that** the predefinable value changes as a function of an adaptation, the adaptation being carried out when predefinable operating conditions are present.

3. System according to Claim 1, **characterized in that** the predefinable value is composed of a basic value and an offset value and the offset value can be changed, there being in particular provision for the offset value to be taken into account during the formation of the electrical signal (I).

4. System according to Claim 2, in particular according to Claim 3, **characterized in that** the predefinable value, in particular the offset value, is changed if a change in the transmission ratio is sensed when the predefinable operating conditions are present, there being in particular provision for the predefinable value, in particular the offset value, to be changed in such a way that the change in the transmission ratio is counteracted.

5. System according to Claim 2, **characterized in that** at least one of the predefinable operating conditions is present if the transmission is in a ratio hold operating state in which the transmission ratio is kept essentially constant by virtue of the fact that the electrical signal (I) is set to the predefinable value.

6. System according to Claim 5, **characterized in that** further of the predefinable operating conditions are present
- if quasi-steady-state operating states of the transmission are present, there being in particular provision for quasi-steady-state operating states to be present if the longitudinal speed of the vehicle, in particular the output speed of the transmission, does not change significantly over time, and/or
- if the longitudinal speed of the vehicle, in particular the output speed or the input speed of the transmission, is within a predefinable range, and/or
- if the temperature of the transmission is within a predefinable range, and/or
- if the transmission ratio of the transmission is within a predefinable range.

7. System according to Claim 2, **characterized in that** at least one of the predefinable operating conditions is present if the transmission is in an operating state in which the transmission ratio of the transmission is essentially constant or does not change essentially over time.

8. System according to Claim 7, in particular according to Claims 3 and 7, **characterized in that** the predefinable value, in particular the offset value, is changed as a function of the electrical signal (I) which is set when the predefinable operating conditions are present.

9. System according to Claim 7, **characterized in that** further of the predefinable operating conditions are present,
- if the transmission ratio of the transmission is within a predefinable range, and/or
- if the change in the transmission ratio of the transmission over time is within a predefinable range, and/or
- if quasi-steady-state operating states of the transmission are present, there being in particular provision for quasi-steady-state operating states to be present if the longitudinal speed of the vehicle, in particular the output speed of the transmission, does not change significantly over time, and/or
- if the temperature of the transmission is within a predefinable range.

10. System according to Claim 1, **characterized in that** a pressure is controlled by actuating the valve (15), and a pressure value which represents the pressure in the ratio hold operating state of the transmission is acquired and the predefinable value can be changed as a function of the acquired pressure value.

11. System according to Claim 2, **characterized in that** the electrical signal (I) is set during the adaptation in such a way that the transmission ratio is adjusted to relatively high transmission ratios, there being in particular provision for the electrical signal which is set during the adaptation to be smaller, by a difference value (ΔI), than the electrical signal (I) which is set before the adaptation.

## Revendications

1. Système pour le changement hydraulique du rapport de transmission d'une transmission (2) à rapport réglable en continu dans un véhicule automobile, le changement du rapport s'effectuant par le pilotage d'au moins une soupape (15) par un signal électrique (I), le rapport étant maintenu sensiblement constant dans un état de fonctionnement de la transmission "ratio hold", par le fait que le signal électrique (I) est mis à une valeur pouvant être prédéterminée,
**caractérisé en ce que**
la valeur pouvant être prédéterminée peut être modifiée pendant la marche du véhicule.

2. Système selon la revendication 1,
**caractérisé en ce que**
la modification de la valeur pouvant être prédéterminée s'effectue en fonction d'une adaptation, l'adaptation étant exécutée en présence de conditions de fonctionnement pouvant être prédéterminées.

3. Système selon la revendication 1,
**caractérisé en ce que**
la valeur pouvant être prédéterminée est composée d'une valeur de base et d'une valeur de décalage et la valeur de décalage peut être modifiée, étant prévu en particulier que la valeur de décalage est prise en compte lors de la formation du signal électrique (I).

4. Système selon la revendication 2, en particulier selon la revendication 3,
**caractérisé en ce que**
la valeur pouvant être prédéterminée, en particulier la valeur de décalage, est modifiée lorsque, en présence de conditions de fonctionnement pouvant être prédéterminées, une modification du rapport est détectée, étant prévu en particulier que la valeur pouvant être prédéterminée, en particulier la valeur de décalage, est modifiée de manière à agir en sens inverse de la modification du rapport.

5. Système selon la revendication 2,
**caractérisé en ce qu'**
au moins une des conditions de fonctionnement pouvant être prédéterminées est présente lorsque la transmission se trouve dans un état de fonctionnement "ratio hold" dans lequel le rapport est maintenu sensiblement constant par le fait que le signal électrique (I) est mis à la valeur pouvant être prédéterminée.

6. Système selon la revendication 5,
**caractérisé en ce que**
d'autres conditions de fonctionnement pouvant être prédéterminées sont présentes, si :
- des états de fonctionnement quasi stationnaires de la transmission sont présents, étant prévu en particulier que des états de fonctionnement quasi stationnaires sont présents lorsque la vitesse longitudinale du véhicule, en particulier la vitesse de rotation de sortie de la transmission, ne varie sensiblement pas dans le temps et/ou
- la vitesse longitudinale du véhicule, en particulier la vitesse de rotation de sortie ou la vitesse de rotation d'entrée de la transmission se trouve dans un intervalle pouvant être prédéterminé et/ou
- la température de la transmission se trouve dans un intervalle pouvant être prédéterminé et/ou
- le rapport de la transmission se trouve dans un intervalle pouvant être prédéterminé.

7. Système selon la revendication 2,
**caractérisé en ce qu'**
au moins une des conditions de fonctionnement pouvant être prédéterminées est présente lorsque la transmission se trouve dans un état de fonctionnement dans lequel le rapport de la transmission est sensiblement constant ou ne varie pas sensiblement dans le temps.

8. Système selon la revendication 7, en particulier selon la revendication 3 et 7,
**caractérisé en ce que**
la valeur pouvant être prédéterminée, en particulier la valeur de décalage, est modifiée en fonction du signal électrique (I) qui est réglé en présence des conditions de fonctionnement pouvant être prédéterminées.

9. Système selon la revendication 7,
**caractérisé en ce que**
d'autres conditions de fonctionnement pouvant être prédéterminées sont présentes si :
- le rapport de la transmission se trouve dans un intervalle pouvant être prédéterminé et/ou
- la variation dans le temps du rapport de la transmission se trouve dans un intervalle pouvant être prédéterminé et/ou
- des états de fonctionnement quasi stationnaires de la transmission sont présents, étant prévu en particulier que des états de fonctionnement quasi stationnaires sont présents lorsque la vitesse longitudinale du véhicule, en particulier la vitesse de rotation de sortie de la transmission, ne varie pas sensiblement dans le temps et/ou
- la température de la transmission se trouve dans un intervalle pouvant être prédéterminé.

10. Système selon la revendication 1,
**caractérisé en ce qu'**
une pression est commandée par le pilotage de la soupape (15) et une valeur de pression est détectée, laquelle valeur représente la pression dans l'état de fonctionnement de la transmission "ratio hold" et la valeur pouvant être prédéterminée peut être modifiée en fonction de la valeur de pression détectée.

11. Système selon la revendication 2,
**caractérisé en ce que**
le signal électrique (I) est réglé pendant l'adaptation de manière que le changement du rapport vers des rapports plus élevés soit exécuté, étant prévu en particulier que le signal électrique réglé pendant l'adaptation est inférieur d'une valeur différentielle (ΔI) au signal électrique (I) réglé avant l'adaptation.
